# DEMANDE DE BREVET EUROPEEN

(11) **EP 4 261 059 A1**
(43) Date de publication de la demande: **18.10.2023**
(21) Numéro de dépôt: 23167778.2
(22) Date de dépôt: 13.04.2023
(51) Int. Cl.: B60G 15/06

(54) **BUTÉE DE SUSPENSION DE VÉHICULE AUTOMOBILE**

(30) Priorité: 14.04.2022 FR 2203480
(71) Demandeur: NTN-SNR ROULEMENTS, 74000 Annecy (FR)
(72) Inventeur: BONNAUDET, Aurélien, 74000 Annecy (FR)
(74) Mandataire: Sayettat, Julien Christian

(57) **Abrégé**

L'invention concerne un butée de suspension de véhicule automobile dont la coupelle supérieure (1) comprend une base annulaire (14) entourée par un manchon (11) de la coupelle inférieure (2) en formant une interface (15) d'assemblage desdites coupelles qui présente un crochet radial (18) issu du manchon (11) disposé dans une rainure (19) de la base (14), ladite rainure présentant un fond axial entouré par deux bords respectivement supérieur et inférieur qui sont agencés pour retenir axialement les coupelles (1, 2), le bord inférieur présentant des ergots (23) formés en saillie sur une longueur radiale pour venir en interaction axiale avec le crochet (18), chacun desdits ergots présentant une largeur angulaire qui est surmontée par un évidement débouchant dans un creux formé dans le bord supérieur, chacun desdits creux étant disposé en regard axial d'un ergot (23) en présentant une profondeur radiale qui est au moins égale à la longueur radiale desdits ergots.

## Description

L'invention concerne une butée de suspension de véhicule automobile, notamment destinée à être intégrée dans une jambe de suspension télescopique d'une roue directrice de véhicule automobile.

L'invention s'applique notamment à une butée de suspension comprenant une coupelle supérieure fixe destinée à être associée à la caisse du véhicule et une coupelle inférieure tournante comportant un appui direct ou indirect pour le ressort de suspension, lesdites coupelles formant entre elles une interface de rotation relative autour d'un axe.

Après son montage sur un véhicule automobile, la cohésion de la butée de suspension est garantie par serrage axial dans ledit montage. Toutefois, avant son montage, il est souhaitable d'assurer la cohésion des différents composants de la butée, notamment durant son transport et/ou sa manipulation lors dudit montage.

Pour ce faire, le document WO-2009/019340 propose une coupelle inférieure comprenant une couronne qui est entourée par une jupe de la coupelle supérieure en formant entre elles une chambre annulaire, la jupe étant équipée de crochets engagés dans une cavité radiale formée dans la couronne.

Toutefois, la réalisation de cette cavité complexifie la fabrication de la coupelle inférieure, notamment par moulage d'un matériau thermoplastique, en ce qu'elle empêche un démoulage axial de la pièce.

Par ailleurs, le document WO-2009/019340 prévoit d'équiper la chambre annulaire avec un anneau d'étanchéité pour empêcher d'une part les fuites du lubrifiant présent dans l'interface de rotation, et d'autre part la contamination de ladite interface avec des polluants extérieurs.

En particulier, l'anneau est monté mobile dans une gorge annulaire formée dans la couronne pour venir radialement en contact frottant sur la jupe de façon à assurer un bon compromis entre la fonction étanchéité et le couple induit par cette fonction, et ce même en cas de déformation de la butée sous l'effet des efforts subis.

Toutefois, la réalisation de cette gorge complexifie également la fabrication de la coupelle inférieure, notamment par moulage d'un matériau thermoplastique, en ce qu'elle empêche également un démoulage axial de la pièce.

L'invention vise à perfectionner l'art antérieur en proposant notamment une butée de suspension dans laquelle les coupelles peuvent être fabriquées simplement par moulage, et ce en particulier en relation avec un butée de suspension présentant un bon compromis entre étanchéité et couple induit.

A cet effet, l'invention propose une butée de suspension de véhicule automobile, ladite butée comprenant une coupelle supérieure et une coupelle inférieure formant entre elles une interface de rotation relative desdites coupelles autour d'un axe, la coupelle supérieure comprenant une base annulaire entourée par un manchon de la coupelle inférieure en formant une interface d'assemblage desdites coupelles, ladite interface présentant un crochet radial issu du manchon qui est disposé dans une rainure de la base, ladite rainure présentant un fond axial entouré par deux bords respectivement supérieur et inférieur qui sont agencés pour retenir axialement les coupelles dans une configuration assemblée par interaction axiale avec ledit crochet, le bord inférieur présentant des ergots séparés angulairement par des secteurs en retrait, lesdits ergots étant formés en saillie sur une longueur radiale par rapport aux secteurs en retrait pour venir en interaction axiale avec le crochet, chacun desdits ergots présentant une largeur angulaire qui est surmontée par un évidement formé dans le fond, ledit évidement débouchant dans un creux formé dans le bord supérieur, chacun desdits creux étant disposé en regard axial d'un ergot en présentant une profondeur radiale qui est au moins égale à la longueur radiale desdits ergots.

D'autres particularités et avantages de l'invention apparaîtront dans la description qui suit, faite en référence aux figures jointes, dans lesquelles :
[Fig.1] représente en coupe longitudinale une butée de suspension selon un mode de réalisation de l'invention ;
[Fig.1a] est un agrandissement d'un côté de la figure 1 ;

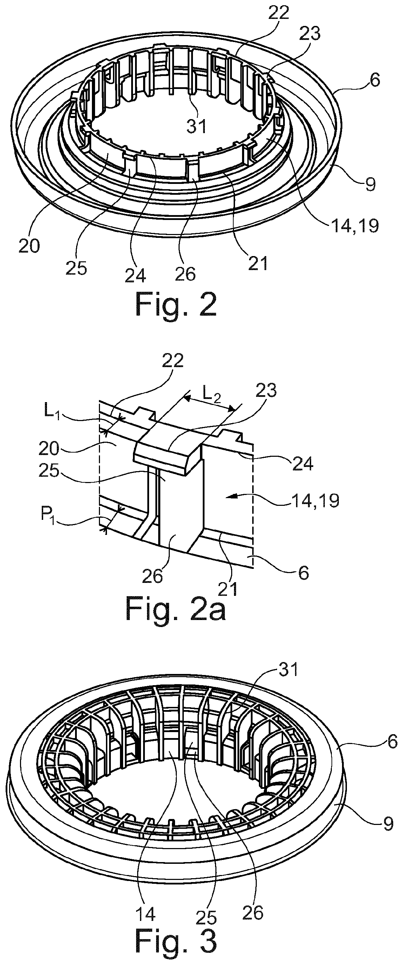

[Fig.2] représente en perspective vue de dessous le couvercle de la butée de suspension selon la figure 1 ;
[Fig.2a] est un agrandissement de la figure 2 ;
[Fig.3] représente en perspective vue de dessus le couvercle de la figure 2 ;
[Fig.4] représente en coupe longitudinale le moulage du couvercle des figures 2 et 3 ;
[Fig.5] représente en perspective vue de dessus le support de la butée de suspension selon la figure 1 ;
[Fig.6] est une vue en perspective de dessus de l'élément d'étanchéité de la butée de suspension selon la figure 1.

En relation avec ces figures, on décrit ci-dessous une butée de suspension, notamment destinée à être intégrée dans une jambe de suspension télescopique d'une roue directrice de véhicule automobile.

Une jambe de force comprend classiquement un amortisseur, un ressort de suspension, ainsi qu'une butée de suspension sur laquelle le ressort vient en appui directement ou indirectement, une roue d'un véhicule automobile étant montée sur le châssis par l'intermédiaire d'une telle jambe de force qui permet la suspension de la caisse relativement au sol.

La butée de suspension comprend une coupelle supérieure fixe 1 destinée à être associée à la caisse du véhicule, notamment via un bloc filtrant, et une coupelle inférieure tournante 2 comportant un appui 3 direct ou indirect pour le ressort de suspension, lesdites coupelles formant entre elles une interface 4 de rotation relative autour d'un axe A.

Ainsi, lorsque le ressort est sollicité en compression et en détente, l'enroulement des spires de ce dernier sur elles-mêmes est modifié, ce qui entraîne la rotation de la coupelle inférieure 2. En outre, le braquage des roues induit également une rotation de la coupelle inférieure 2.

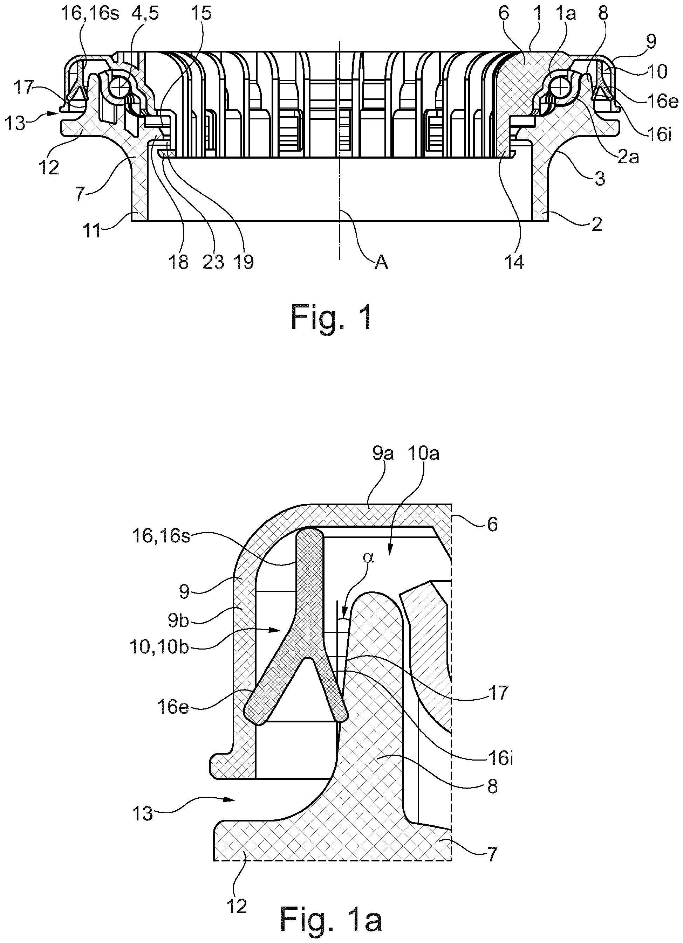

Dans cette description, les termes de positionnement dans l'espace sont pris en référence à l'axe A de rotation de la butée de suspension (vertical sur la figure 1). En particulier, les termes « intérieur » et « extérieur » sont relatifs à une disposition respectivement proche et à distance de cet axe A, et les termes « axial » et « radial » sont relatifs à une disposition respectivement suivant cet axe A et s'éloignant ou se rapprochant de lui. Par ailleurs, les termes « supérieur » ou « dessus » et « inférieur » ou « dessous » sont relatifs à la disposition de la butée telle que représentée sur la figure 1, et les termes « interne » et « externe » sont relatifs à une disposition par rapport à l'intérieur de la butée.

De façon connue, l'interface 4 de rotation peut comprendre des corps roulants 5 qui sont disposés entre les coupelles 1, 2 afin de permettre leur rotation relative autour de l'axe A. Pour ce faire, les coupelles supérieure 1 et inférieure 2 peuvent comprendre chacune une rondelle 1a, 2a, notamment réalisée en tôle emboutie, formant entre elles l'interface 4 de rotation, chacune desdites rondelles étant pourvue d'une piste de roulement respectivement inférieure et supérieure entre lesquelles les corps roulants 5 sont disposés. En variante, les coupelles 1, 2 peuvent être montées en rotation relative de façon lisse, avec ou sans interposition d'une rondelle de friction dans l'interface 4 de rotation.

La butée comprend en outre deux pièces d'habillage, notamment réalisées par moulage d'un matériau thermoplastique, par exemple de type polyamide 6.6 pouvant être chargé fibres de verre. Ces pièces sont respectivement un couvercle 6 associé sur la rondelle supérieure 1a pour être interposé directement ou indirectement entre le châssis et ladite rondelle supérieure, et un support 7 associé sous la rondelle inférieure 2a, ledit support comprenant l'appui 3 pour le ressort directement ou indirectement. Ces pièces d'habillage 6, 7 permettent notamment une reprise des efforts du ressort et éventuellement de ceux de la butée de choc.

En particulier, la coupelle inférieure 2 comprend une couronne 8 formée sur le support 7 qui est entourée par une jupe 9 de la coupelle supérieure 1 qui est formée sur le couvercle 6, une chambre annulaire 10 étant formée entre ladite couronne et ladite jupe.

En relation avec la figure 1a, la jupe 9 présente une paroi supérieure 9a s'étendant radialement et une paroi centrale 9b s'étendant axialement, la chambre 10 présentant une section supérieure 10a débouchant dans l'interface 4 de rotation et une section centrale 10b débouchant à l'extérieur de ladite chambre.

Dans le mode de réalisation représenté, la couronne 8 s'étend depuis un manchon 11 de la coupelle inférieure 2 lui-même formé en une seule pièce sous le support 7, ledit manchon présentant une extension radiale extérieure 12 en regard de laquelle l'extrémité libre de la jupe 9 est disposée axialement pour former une ouverture amont 13 de la chambre 10. Dans la description, les termes « aval » et « amont » sont définis par rapport à une direction vers l'intérieur de la butée.

En particulier, l'appui ressort 3 est formé à la jonction entre une paroi extérieure respectivement du manchon 11 et de l'extension radiale 12, l'ouverture amont 13 étant formée par un jeu axial permettant la rotation de la coupelle inférieure 2 par rapport à la coupelle supérieure 1 sans interférence entre elles.

Par ailleurs, la coupelle supérieure 1 comprend une base annulaire 14 formée en une seule pièce sous le couvercle 6, ladite base étant entourée par le manchon 11, notamment par une portion supérieure dudit manchon, en formant une interface 15 d'assemblage des coupelles 1, 2.

La butée comprend un élément d'étanchéité annulaire 16 qui est monté dans la chambre 10 pour empêcher, d'une part, les fuites du lubrifiant présent dans l'interface 4 de rotation et, d'autre part, la contamination de ladite interface avec des polluants extérieurs.

Dans le mode de réalisation représenté, l'ouverture amont 13 s'étend sensiblement radialement en débouchant dans la section centrale 10b de la chambre 10 suivant un chemin axial jusqu'à l'élément d'étanchéité 16. Ainsi, une chicane d'entrée est formée pour empêcher un chemin direct de projection des polluants depuis l'ouverture amont 13 vers l'élément d'étanchéité 16.

Selon une réalisation, la chambre 10 peut contenir une substance visqueuse pour améliorer l'étanchéité conférée par l'élément d'étanchéité 16. En particulier, la substance peut également présenter une fonction de lubrification pour la rotation relative des coupelles 1, 2.

L'élément d'étanchéité 16 comprend une lèvre extérieure 16e en contact sur la paroi centrale 9b de la jupe 9 et une lèvre intérieure 16i en contact sur une paroi latérale 17 de la couronne 8 qui est disposée radialement en regard de ladite paroi centrale.

En particulier, les sections supérieure 10a et centrale 10b de la chambre 10 sont délimitées entre la couronne 8 et respectivement la paroi supérieure 9a et la paroi centrale 9b de la jupe 9, la rondelle inférieure 2a étant disposée dans la couronne 8 en étant radialement opposée à la paroi latérale 17.

L'élément d'étanchéité 16 comprend également une lèvre supérieure 16s qui est en contact sur la paroi supérieure 9a de la jupe 9, la paroi latérale 17 de la couronne 8 s'étendant axialement en présentant un angle de conicité a par rapport à la direction axiale, notamment un angle de conicité α compris entre 5° et 20°.

Ainsi, la conicité de la paroi latérale 17 permet de maintenir l'élément d'étanchéité 16 dans la chambre 10 et, en cas de projection de polluants depuis l'ouverture amont 13 vers ledit élément, un éventuel déplacement de celui-ci est empêché par l'appui de la lèvre supérieure 16s qui vient renforcer l'étanchéité conférée.

De façon avantageuse, la lèvre supérieure 16s s'étend axialement pour venir en butée axiale sur la paroi supérieure 9a de la jupe 9, ladite lèvre supérieure pouvant venir séparer les sections supérieure 10a et centrale 10b de la chambre 10.

De façon avantageuse, l'élément d'étanchéité 16 est formé d'une pièce, notamment obtenue par moulage d'un matériau thermoplastique rigide, par exemple en polyéthylène, en polypropylène, en polyamide (PA) 6, 6.6, 11 ou 12, en polyoxyméthylène (POM) ou en polycétone (PK).

Dans le mode de réalisation représenté, la lèvre supérieure 16s présente une extrémité supérieure en contact sur la paroi supérieure 9a et une extrémité inférieure depuis laquelle les lèvres intérieure 16i et extérieure 16e s'étendent en V renversé. En particulier, la lèvre intérieure 16i et/ou la lèvre extérieure 16e forme un angle aigu avec respectivement la paroi latérale 17 et la paroi centrale 9b.

Cette réalisation permet notamment d'obtenir un compromis particulièrement satisfaisant entre la fonction étanchéité et le couple induit par cette fonction, et ce même en cas de déformation de la butée sous l'effet des efforts subis.

Les lèvres intérieure 16i et extérieure 16e présentent chacune une extrémité libre qui est en contact sur respectivement la paroi latérale 17 et la paroi centrale 9b. Selon une réalisation, les lèvres intérieure 16i et extérieure 16e sont en contact frottant sur respectivement la paroi latérale 17 et la paroi centrale 9b lorsque les coupelles 1, 2 sont en rotation relative.

Selon une autre réalisation, la lèvre intérieure 16i est en contact frottant sur la paroi latérale 17 lorsque les coupelles 1, 2 sont en rotation relative, le contact de la lèvre extérieure 16e sur la paroi centrale 9b étant agencé pour solidariser en rotation l'élément d'étanchéité 16 dans la jupe 9.

Les figures représentent une réalisation dans laquelle la lèvre intérieure 16i présente une épaisseur qui est inférieure à l'épaisseur des lèvres extérieure 16e et supérieure 16s, afin de faciliter le montage de l'élément d'étanchéité 16 sur la couronne 8, tout en limitant la rigidité de ladite lèvre et donc son couple de frottement sur la paroi latérale 17.

De façon avantageuse, la paroi latérale 17 de la couronne 8 s'étend continûment suivant son angle de conicité a, notamment en ne présentant pas de gorge radiale, afin de pouvoir démouler axialement le support 7. En particulier, la paroi latérale conique 17 s'étend depuis deux diamètres extérieurs respectivement inférieur et supérieur de la couronne 8, la valeur du diamètre supérieur étant inférieure à la valeur du diamètre inférieur.

De même, le couvercle 6 peut être démoulé axialement en prévoyant d'équiper l'interface d'assemblage 15 avec une structure spécifique permettant d'assurer la cohésion des différents composants de la butée avant son montage sur un véhicule automobile, notamment durant son transport et/ou sa manipulation lors dudit montage.

Pour ce faire, l'interface d'assemblage 15 présente un crochet radial 18 issu du manchon 11 qui est disposé dans une rainure 19 de la base 14, ledit crochet s'étendant notamment annulairement de façon continue dans le manchon 11.

La rainure 19 présente un fond axial 20 entouré par deux bords respectivement supérieur 21 et inférieur 22 qui sont agencés pour retenir axialement les coupelles 1, 2 dans une configuration assemblée par interaction axiale avec le crochet 18.

Pour ce faire, le bord inférieur 22 présente des ergots 23 séparés angulairement par des secteurs en retrait 24, lesdits ergots étant formés en saillie sur une longueur radiale L1 par rapport aux secteurs en retrait 24 pour venir en interaction axiale avec le crochet 18. En particulier, les secteurs en retrait 24 sont disposés dans le prolongement axial du fond 20.

En outre, chacun des ergots 23 présente une largeur angulaire L2 qui est surmontée par un évidement 25 formé dans le fond 20, ledit évidement débouchant dans un creux 26 formé dans le bord supérieur 21. En particulier, chacun des ensembles ergot 23 / évidement 25 / creux 26 présente une largeur angulaire L2 analogue.

Chacun des creux 26 est disposé en regard axial d'un ergot 23 en présentant une profondeur radiale P1 qui est au moins égale à longueur radiale L1 desdits ergots.

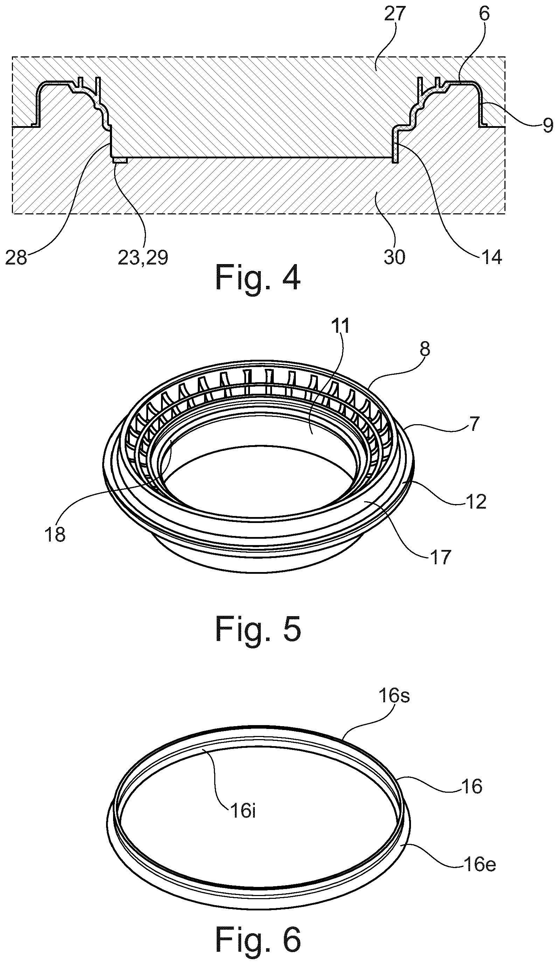

Ainsi, comme représenté sur la figure 4, l'empreinte de moulage 27 peut comprendre des saillies axiales 28 qui forment chacune un évidement 25 et un creux 26, lesdites saillies venant fermer des logements 29 de l'empreinte de moulage 30 dans lesquels respectivement un ergot 23 est formé.

De façon avantageuse, la profondeur radiale P1 des creux 26 est sensiblement égale à la longueur radiale L1 des ergots 23, notamment en ce que les creux 26 présentent une géométrie en négatif des ergots 23.

Dans le mode de réalisation représenté, la base 14 est équipée d'ailettes axiales 31 de rigidification, chacun des ensembles ergot 23 / évidement 25 / creux 26 étant disposé angulairement entre deux ailettes 31 adjacentes.

## Revendications

1. Butée de suspension de véhicule automobile, ladite butée comprenant une coupelle supérieure (1) et une coupelle inférieure (2) formant entre elles une interface (4) de rotation relative desdites coupelles autour d'un axe (A), la coupelle supérieure (1) comprenant une base annulaire (14) entourée par un manchon (11) de la coupelle inférieure (2) en formant une interface (15) d'assemblage desdites coupelles, ladite butée étant **caractérisée en ce que** ladite interface présente un crochet radial (18) issu du manchon (11) qui est disposé dans une rainure (19) de la base (14), ladite rainure présentant un fond axial (20) entouré par deux bords respectivement supérieur (21) et inférieur (22) qui sont agencés pour retenir axialement les coupelles (1, 2) dans une configuration assemblée par interaction axiale avec ledit crochet, le bord inférieur (22) présentant des ergots (23) séparés angulairement par des secteurs en retrait (24), lesdits ergots étant formés en saillie sur une longueur radiale (L1) par rapport aux secteurs en retrait (24) pour venir en interaction axiale avec le crochet (18), chacun desdits ergots présentant une largeur angulaire (L2) qui est surmontée par un évidement (25) formé dans le fond (20), ledit évidement débouchant dans un creux (26) formé dans le bord supérieur (21), chacun desdits creux étant disposé en regard axial d'un ergot (23) en présentant une profondeur radiale (P1) qui est au moins égale à la longueur radiale (L1) desdits ergots.

2. Butée de suspension selon la revendication 1, **caractérisée en ce que** le crochet (18) s'étend annulairement de façon continue dans le manchon (11).

3. Butée de suspension selon l'une des revendications 1 ou 2, **caractérisée en ce que** la profondeur radiale (P1) des creux (26) est sensiblement égale à la longueur radiale (L1) des ergots (23).

4. Butée de suspension selon la revendication 3, **caractérisée en ce que** les creux (26) présentent une géométrie en négatif des ergots (23).

5. Butée de suspension selon l'une quelconque des revendications 1 à 4, **caractérisée en ce que** les secteurs en retrait (24) sont disposés dans le prolongement axial du fond (20).

6. Butée de suspension selon l'une quelconque des revendications 1 à 5, **caractérisée en ce que** la base (14) est équipée d'ailettes axiales (31) de rigidification.

7. Butée de suspension selon la revendication 6, **caractérisée en ce que** chacun des ensembles ergot (23) / évidement (25) / creux (26) est disposé angulairement entre deux ailettes (31) adjacentes.

8. Butée de suspension selon l'une quelconque des revendications 1 à 7, **caractérisée en ce que** la coupelle inférieure (2) présente un support (7) en matériau thermoplastique sous lequel le manchon (11) est formé.

9. Butée de suspension selon l'une quelconque des revendications 1 à 8, **caractérisée en ce que** la coupelle supérieure (1) présente un couvercle (6) en matériau thermoplastique sous lequel la base (14) est formée.

10. Butée de suspension selon l'une quelconque des revendications 1 à 9, **caractérisée en ce que** la coupelle inférieure (2) comprend une couronne (8) qui est entourée par une jupe (9) de la coupelle supérieure (1) en formant une chambre annulaire (10) dans laquelle un élément d'étanchéité annulaire (16) est monté, ladite jupe présentant une paroi supérieure (9a) s'étendant radialement et une paroi centrale (9b) s'étendant axialement, l'élément d'étanchéité (16) comprenant une lèvre extérieure (16e) en contact sur la paroi centrale (9b) de la jupe (9) et une lèvre intérieure (16i) en contact sur une paroi latérale (17) de la couronne (8) qui est disposée radialement en regard de ladite paroi centrale (9b), l'élément d'étanchéité (16) comprenant une lèvre supérieure (16s) qui est en contact sur la paroi supérieure (9a) de la jupe (9), la paroi latérale (17) de la couronne (8) s'étendant axialement en présentant un angle de conicité (a) par rapport à la direction axiale.
